# EUROPÄISCHE PATENTSCHRIFT

(11) **EP 2 116 417 B1**
(45) Veröffentlichungstag und Bekanntmachung des Hinweises auf die Patenterteilung: **23.02.2011**
(21) Anmeldenummer: 08103908.3
(22) Anmeldetag: 09.05.2008
(51) Int. Cl.: B60P 1/02, B60P 3/04, B62D 29/04, B62D 33/04

(54) **Paneel mit zwei Grundschienen für einen Kofferaufbau**
Cargo box panel with two rails
Panel avec deux guidages pour un ensemble de coffre

(43) Veröffentlichungstag der Anmeldung: 11.11.2009
(73) Patentinhaber: Schmitz Cargobull AG, 48341 Altenberge (DE)
(72) Erfinder: Beelmann, Reinhard, 45721 Haltern am See (DE); Heßling, Alfons, 48683 Ahaus (DE); Küpers, Josef, 48703 Stadtlohn (DE)
(74) Vertreter: Cohausz & Florack

(56) Entgegenhaltungen:
- DE-U1- 20 303 966
- DE-U1- 29 708 856
- US-A- 2 679 214
- US-A- 4 168 667
- US-A- 4 886 404
- US-A1- 2008 063 487
- US-B1- 6 606 875

## Beschreibung

Die Erfindung betrifft ein Dachpaneel für einen Kofferaufbau eines Lastkraftwagens, Aufliegers und/oder Anhängers, wobei das Paneel wenigstens zwei am Paneel angebrachte Grundschienen aufweist, wobei wenigstens zwei die wenigstens zwei Grundschienen kreuzende Zusatzschienen vorgesehen sind und wobei jede der wenigstens zwei Zusatzschienen verstellbar entlang der wenigstens zwei Grundschienen an den wenigstens zwei Grundschienen befestigt ist.

Paneele eines Kofferaufbaus, an denen wenigstens zwei Grundschienen angebracht sind, sind seit geraumer Zeit am Markt erhältlich. Die Grundschienen dienen dabei insbesondere zur Ladungssicherung oder zur Aufnahme von Zusatzeinrichtungen, wie etwa quer zum Kofferaufbau verlaufenden Trägern, auf die Standardpaletten aufgesetzt werden können. Diese Träger erlauben letztlich die Beladung des Kofferaufbaus auf zwei unterschiedlichen Ebenen. Die Grundschienen können alternativ oder zusätzlich auch zur variablen Montage von Zusatzeinrichtungen für den hängenden Transport von Gütern dienen.

Nachteilig an den bekannten Paneelen ist deren verhältnismäßig aufwendige Herstellung. Da kundenseitig eine sehr unterschiedliche Positionierung der Grundschienen gewünscht wird, müssen für die Montage auch sehr viele unterschiedliche Paneele bereitgehalten oder jedenfalls gefertigt werden. Da die Gesamtzahl der mit Schienen nachgefragten Paneele sich auf eine Vielzahl unterschiedlicher Paneele aufteilt, sind die Paneele entweder Einzelanfertigungen oder in Kleinserien produziert. Dadurch wird nicht nur die Montagezeit der Grundschienen, sondern auch der logistische Aufwand für das Fertigen von Paneelen einerseits und fertigen Kofferaufbauten andererseits erhöht.

Ein Dachpaneel der eingangs genannten Art, von dem die Erfindung ausgeht, ist in der US 4,168,667 A beschrieben. Nachteilig an dem bekannten Dachpaneel ist jedoch, dass dieses nur mit einem erhöhten Aufwand mit einem Deckenverdampfer ausgerüstet werden kann.

Kofferaufbauten mit anderen sich kreuzenden Grund- und Zusatzschienen aufweisenden Schienensystemen sind aus der DE 297 08 856 U1, der DE 203 03 966 U1, der US 2,679,212 A, der US 4,886,404 A und der US 2008/0063487 A1 bekannt.

Der vorliegenden Erfindung liegt daher die Aufgabe zu Grunde, das eingangs genannte Paneel derart auszugestalten und weiterzubilden, dass die Fertigung des Paneels mit einem Deckenverdampfer einfacher, schneller und kostengünstiger möglich ist.

Diese Aufgabe ist bei einem Paneel gemäß dem Oberbegriff von Anspruch 1 dadurch gelöst, dass an den wenigstens zwei Zusatzschienen ein Deckenverdampfer zur Kühlung des Kofferaufbaus befestigt ist.

Durch die Montage der Zusatzschienen über Kreuz zu den Grundschienen und die Verstellbarkeit der Zusatzschienen entlang der Grundschienen ist es nicht erforderlich, eine Vielzahl unterschiedlicher Paneele herzustellen, um den verschiedenen kundenseitigen Anforderungen Rechnung zu tragen. Es kann für alle Anwendungszwecke ein einheitliches Paneel verwendet werden, was die Herstellung vereinfacht, beschleunigt und damit kostengünstiger werden lässt. Bei dem erfindungsgemäßen Paneel ist es lediglich erforderlich, die Zusatzschienen in Abhängigkeit von den Montagepunkten der jeweils gewünschten Zusatzeinrichtungen in den Grundschienen zu befestigen. Durch die Führung der Zusatzschienen über Kreuz zu den Grundschienen kann nahezu jeder beliebige Montagepunkt entlang des jeweiligen Paneels erreicht werden. Das gilt bei genau zwei Zusatzschienen insbesondere, wenn die Montagepunkte auf den Seiten eines Rechtecks oder Quadrats liegen. Ansonsten müssen ggf. weitere Zusatzschienen vorgesehen sein.

Ein weiterer bedeutender Vorteil des erfindungsgemäßen Paneels liegt darin, dass die Zusatzschienen auch nachträglich noch ohne weiteres gegenüber den Grundschienen verstellt werden können. Selbst die nachträgliche Erweiterung um weitere Zusatzschienen ist möglich. Wenn sich also der Einsatzzweck eines Kofferaufbaus oder andere Bedingungen für dessen Nutzung ändern, ist es nicht mehr erforderlich, auf umständlichem Wege zusätzliche Schienen nachträglich in das Paneel einzubauen, um so Zusatzeinrichtungen an Positionen befestigen zu können, an denen zuvor eine Befestigung nicht möglich oder vorgesehen war.

Bei einer ersten Ausgestaltung des Paneels sind die wenigstens zwei Zusatzschienen stufenlos verstellbar in wenigstens zwei Grundschienen geführt. Dadurch können Zusatzeinrichtungen an jedem beliebigen Punkt des Paneels montiert werden.

Alternativ oder zusätzlich sind die wenigstens zwei Grundschienen bündig in das Paneel eingelassen. Auf diese Weise wird der zur Beladung des Kofferaufbaus zur Verfügung stehende Raum durch die über Kreuz geführten Grundschienen und Zusatzschienen möglichst wenig eingeschränkt.

Bei einer konstruktiv besonders einfachen Ausgestaltung des Paneels ist vorgesehen, dass die wenigstens zwei Grundschienen parallel zueinander ausgerichtet sind. Diese Ausrichtung der Grundschienen erleichtert zudem das Verstellen der Zusatzschienen relativ zu den Grundschienen.

Alternativ oder zusätzlich können die wenigstens zwei Zusatzschienen parallel zueinander ausgerichtet sein. Vorzugsweise sind die Zusatzschienen dabei in einem gleichbleibenden Abstand horizontal oder vertikal zum Kofferaufbau ausgerichtet.

Bei der erfindungsgemäßen Ausgestaltung handelt es sich bei dem die Grundschienen und die Zusatzschienen aufweisenden Paneel um das Dachpaneel des Kofferaufbaus. Daher stören die in dem Kofferaufbau angeordneten Zusatzschienen das Be- und Entladen des Kofferaufbaus kaum. Ferner ist an den wenigstens zwei Zusatzschienen ein Deckenverdampfer zur Kühlung des Kofferaufbaus oder Teilen davon befestigt. Durch die Führung der Grundschienen und Zusatzschienen über Kreuz kann die erzielte Flexibilität zur Montage von Zusatzausstattungen besonders vorteilhaft ausgenutzt werden.

Es sind eine Reihe unterschiedlicher Deckenverdampfer am Markt verfügbar, von denen kundenseitig für unterschiedliche Anwendungen spezielle Deckenverdampfer nachgefragt werden, die regelmäßig unterschiedliche Anschlussbilder oder Montagepunkte aufweisen. Die Führung der Grundschienen und der Zusatzschienen über Kreuz erlaubt ohne weiteres die Montage unterschiedlicher Deckenverdampfersysteme an einem Standarddachpaneel. Auf diese Weise wird zusätzlich ein schneller und kostengünstiger Wechsel von Deckenverdampfersystemen ermöglicht, sofern der Kunde zu einem späteren Zeitpunkt den Kofferaufbau mit einem anderen Deckenverdampfersystem betreiben will.

In diesem Zusammenhang ist es zweckmäßig, wenn an den wenigstens zwei Zusatzschienen ein Schutzrahmen für den Deckenverdampfer befestigt ist. Die Schutzrahmen sollen eine Beschädigung des Deckenverdampfers beim Be- und Entladen des Kofferaufbaus verhindern und stellen regelmäßig eine vom Deckenverdampfer separate Struktur dar. Werden die Schutzrahmen in den gleichen Zusatzschienen wie der Deckenverdampfer montiert, kann auf zusätzliche Montageeinrichtungen ebenso wie weitere Zusatzschienen verzichtet werden.

Nachfolgend wird die Erfindung anhand einer lediglich ein Ausführungsbeispiel darstellenden Zeichnung näher erläutert. In der Zeichnung zeigt
- Fig. 1: einen ein erfindungsgemäßes Dachpaneel aufweisenden Kofferaufbau, der auf einem von einem Lastkraftwagen gezogenen Auflieger montiert ist,
- Fig. 2: ein Detail des Dachpaneels aus Fig. 1 im Bereich der Grundschienen und Zusatzschienen in einer Draufsicht auf die Unterseite des Dachpaneels ohne Deckenverdampfer,
- Fig. 3: das Dachpaneel aus Fig. 2 in einer Schnittansicht entlang der Ebene III-III aus Fig. 2,
- Fig. 4: das Detail des Dachpaneels aus Fig. 2 mit einem daran befestigten ersten Deckenverdampfer in einer Draufsicht auf die Unterseite des Dachpaneels und
- Fig. 5: das Detail des Dachpaneels aus Fig. 2 mit einem daran angebrachten zweiten Deckenverdampfer ebenfalls in einer Draufsicht auf die Unterseite des Dachpaneels.

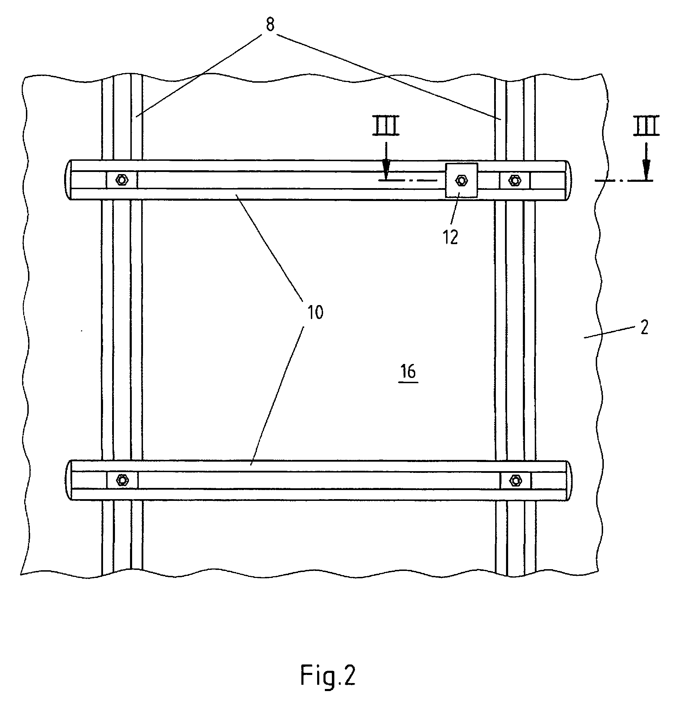

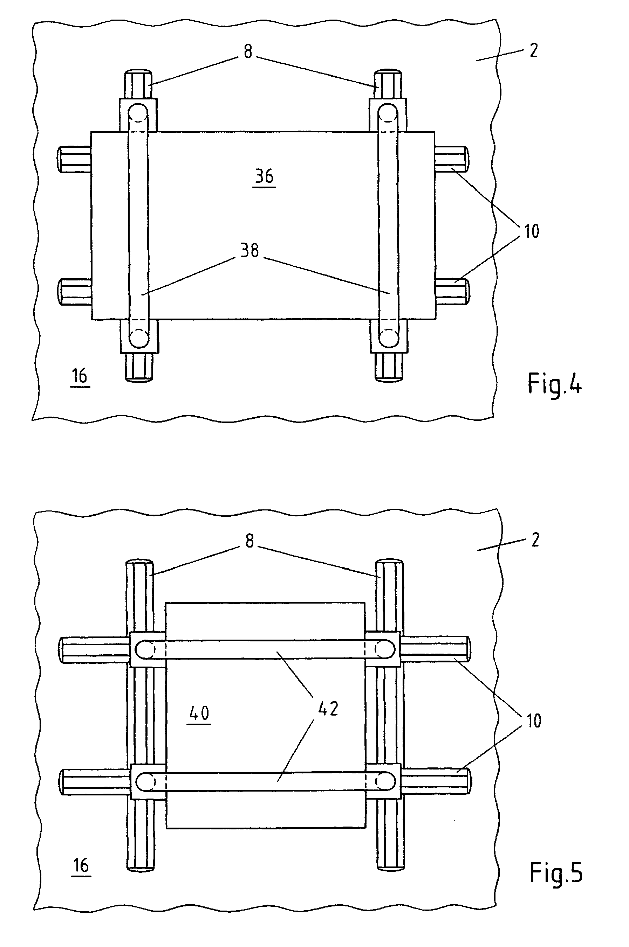

- Fig. 5: das Detail des Dachpaneels aus Fig. 2 mit einem daran angebrachten zweiten Deckenverdampfer ebenfalls in einer Draufsicht auf die Unterseite des Dachpaneels.

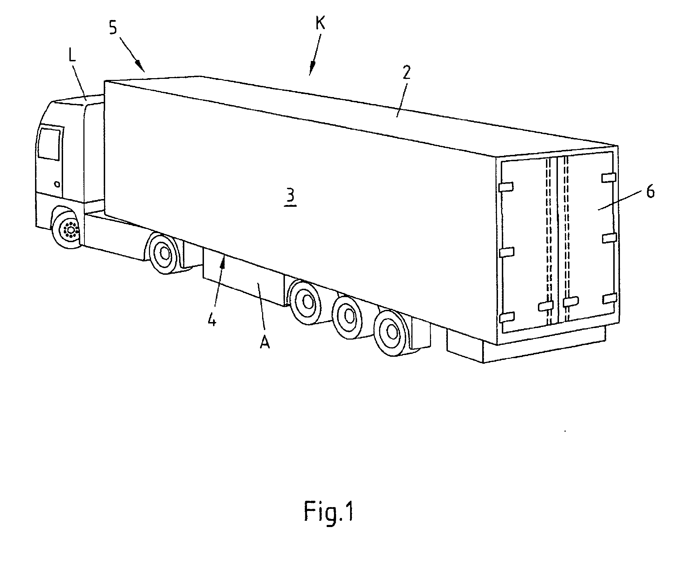

In Fig. 1 ist ein Lastkraftwagen L mit einem Auflieger A dargestellt, der einen Kofferaufbau K, umfassend ein Dachpaneel 2, zwei Seitenwandpaneele 3, ein Bodenpaneel 4, ein Stirnwandpaneel 5 und eine Rückwand 6 trägt. Der Kofferaufbau K weist ein Dachpaneel 2 auf, an dem wenigstens abschnittsweise Grundschienen 8 und Zusatzschienen 10 angebracht sind.

Alternativ könnte der Kofferaufbau auch direkt auf einen Lastkraftwagen oder auf einen gewöhnlichen Anhänger montiert sein. Auswirkungen auf die erzielbaren Effekte und Vorteile hat dies grundsätzlich keine. Ferner werden unter dem Begriff Paneel neben mehrschichtigen oder mehrlagigen Strukturen, etwa mit äußeren dünnen Decklagen aus Metall oder Kunststoff mit dazwischen eingeschlossenem geschäumtem Kunststoff, vorzugsweise geschäumtem Polyurethan, auch andere Strukturen wie beispielsweise massive Strukturen verstanden. Der beschriebene Schichtaufbau ist jedoch grundsätzlich bevorzugt.

Ein Detail des Dachpaneels 2 im Bereich der Gründschienen 8 und der Zusatzschienen 10 ist in der Fig. 2 dargestellt. Entlang des Dachpaneels 2 erstrecken sich in einem konstanten Abstand zueinander zwei Grundschienen 8, die unmittelbar mit dem Dachpaneel 2 verbunden sind. In den Grundschienen 8 eingehängt und an den Grundschienen 8 befestigt befinden sich zwei Zusatzschienen 10, die ebenfalls einen konstanten Abstand voneinander aufweisen. Die Zusatzschienen 10 kreuzen dabei die Grundschienen 8 etwa in einem rechten Winkel. Zudem sind die Zusatzschienen 10 im Inneren des Laderaums des Kofferaufbaus K vorgesehen. Jede der beiden Zusatzschienen 10 ist in jeder der beiden Grundschienen 8 fixiert. Darüber hinaus ist in der oberen Zusatzschiene 10 eine beispielhafte Montagevorrichtung 12 für die Montage eines Deckenverdampfers vorgesehen und in dieser Zusatzschiene 10 befestigt.

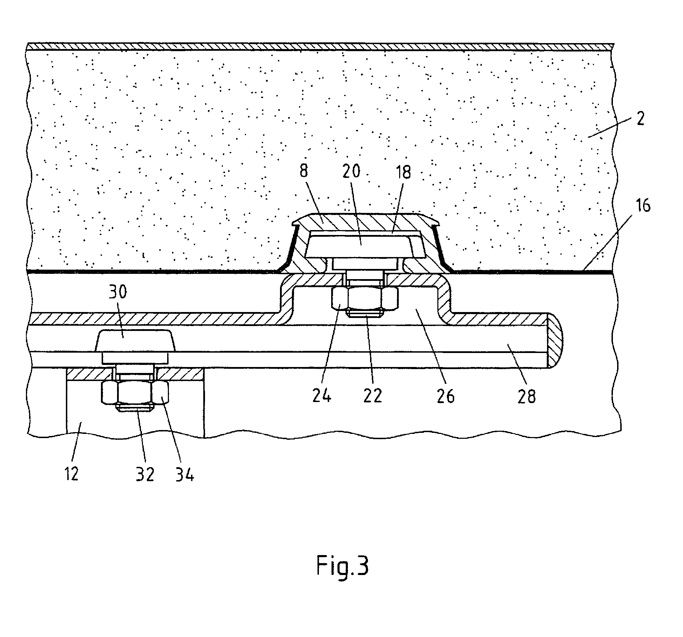

Ein Schnitt durch das Dachpaneel 2 entlang der Ebene III-III aus Fig. 2 ist in der Fig. 3 dargestellt. Bei dem dargestellten und insoweit bevorzugten Dachpaneel 2 ist die Grundschiene 8 im Dachpaneel 2 aufgenommen und schließt an seiner Unterseite bündig mit einer inneren Decklage 16 des Dachpaneels 2 ab. Somit ragt lediglich die Zusatzschiene 10 in den Laderaum des Kofferaufbaus K hinein. In der Nut 18 der Grundschiene 8 befindet sich ein Nutenstein 20, an den sich eine Gewindestange 22 anschließt, die durch die Öffnung der Grundschiene 8 nach außen und durch eine korrespondierende Öffnung in der Zusatzschiene 10 in die Zusatzschiene hineingeführt ist. Auf die Gewindestange ist eine Kontermutter 24 derart aufgeschraubt, dass die Zusatzschiene 10 kraftschlüssig in der Grundschiene 8 gehalten wird, so dass ein unbeabsichtigtes Verschieben der Zusatzschiene 10 entlang der Grundschiene 8 verhindert wird. Da die Kontermutter 24 an einer Vertiefung 26 der Zusatzschiene 10 angeordnet ist, kann die Nut 28 der Zusatzschiene 10 über ihre gesamte Länge zur Montage einer zusatzeinrichtung ausgenutzt werden. Ferner kann die zusatzschiene 10 an einer beliebigen Stelle entlang der Grundschiene 8 fixiert werden in Abhängigkeit von den Gegebenheiten des Einzelfalls.

Sollte die Zuatzschiene 10 nicht über ihre gesamte Länge die Montage einer Zusatzeinrichtung erlauben müssen, insbesondere nicht im Kreuzungsbereich der Zusatzschiene 10 mit der Grundschiene 8, oder soll der Laderaum des Kofferaufbaus K möglichst wenig hinsichtlich seiner Ladehöhe eingeschränkt werden, kann auf die Vertiefung 26 in der Zusatzschiene 10 zu dessen Montage in den Grundschienen 8 bedarfsweise verzichtet werden. In diesem Fall ist die Kontermutter 24 in der durchlaufenden Nut 28 der Zusatzschiene 10 vorgesehen. An der Position der Kontermutter 24 ist dann eine Montage an einer Zusatzeinrichtung nicht oder nur mit erhöhtem Aufwand möglich. Nicht im Einzelnen dargestellt ist, dass die Zusatzschiene 10 ebenso wie die Grundschiene 8 eine T-Nut aufweist.

Bei dem in der Fig. 3 dargestellten Abschnitt des Dachpaneels 2 ist an der Zusatzschiene 10 eine Montagevorrichtung 12 zur Montage eines Deckenverdampfers vorgesehen. Hierbei greift ein Nutenstein 30 in die Nut 28 der Zusatzschiene 10 ein, an dem die Montagevorrichtung 12 gegenüber der Zusatzschiene 10 abgehängt ist. Um ein unbeabsichtigtes Verrutschen der Montagevorrichtung 12 in Bezug auf die Zusatzschiene 10 zu verhindern, kann die Montagevorrichtung 12 durch Anziehen der auf einer mit dem Nutenstein verbundenen Gewindestange 32 aufgeschraubten Kontermutter 34 fixiert werden. Die Montagevorrichtung 12 ist zur Befestigung des Deckenverdampfers als Winkel oder C-förmig ausgebildet.

Es versteht sich in diesem Zusammenhang, dass die Ausgestaltung insbesondere der Montagevorrichtung 12 lediglich beispielhaften Charakter aufweist. Die Montage des Deckenverdampfers kann, wie auch die Montage der Zusatzschiene 10 in der Grundschiene 8, auch auf andere, dem Fachmann geläufige Arten vorgesehen sein.

Der mit dem beschriebenen Paneel erzielbare Vorteil ist beispielhaft in den Fig. 4 und 5 dargestellt, die eine Draufsicht auf die Unterseite des Dachpaneels 2 im Bereich der Grundschienen 8 und Zusatzschienen 10 zeigen. In der Fig. 4 sind ein erster Deckenverdampfer 36 und ein erster montierter Schutzrahmen 38 an den Grundschienen 8 und die Zusatzschienen 10 dargestellt. Die Zusatzschienen 10 sind entlang der Grundschiene 8 dabei derart gegeneinander verschoben, dass sie sich mit den Anschlüssen bzw. Montagepunkten des Deckenverdampfers 36 überdecken. Der Deckenverdampfer 36 ist letztlich über nicht im Einzelnen dargestellte Montagevorrichtungen an den Zusatzschienen 10 montiert. Im Gegensatz dazu ist der Schutzrahmen 38 quer zum Deckenverdampfer 36 und quer zu den Zusatzschienen 10 ausgerichtet und folglich unmittelbar in den Grundschienen 8 montiert, und zwar unter Umgehung der Zusatzschienen 10.

Bei dem in der Fig. 5 dargestellten Ausführungsbeispiel ragt ein zweiter Deckenverdampfer 40 im Gegensatz zu dem in der Fig. 5 dargestellten ersten Deckenverdampfer 36 nicht über die Grundschienen 8 des Dachpaneels 2 hinaus. Aber auch in diesem Fall sind die Zusatzschienen 10 derart gegeneinander in den Grundschienen 8 verschoben, dass das Anschlussbild des Deckenverdampfers 40 mit der Position der Zusatzschienen 10 übereinstimmt. Der Deckenverdampfer 40 ist letztlich in den Zusatzschienen 10 montiert. Gleiches gilt bei dem in der Fig. 5 dargestellten Ausführungsbeispiel für den Schutzrahmen 42, bei dem es sich im Wesentlichen um zwei U-förmig gebogene Rohre handelt, die um den Deckenverdampfer 40 herumlaufen, um den Deckenverdampfer 40 vor Beschädigungen beim Be- und Entladen des Kofferaufbaus K zu schützen.

Insbesondere die Fig. 4 und 5 verdeutlichen, dass beliebige Deckenverdampfer 36,40 mit einem Standarddachpaneel 2 kombiniert werden können. Es ist lediglich erforderlich, die Lage der Zusatzschienen 10 zueinander in Abhängigkeit von dem Anschlussbild des jeweiligen Deckenverdampfers 36,40 zu wählen. Die Verwendung unterschiedlicher Deckenverdampfer 36,40 erfordert also nicht ebenfalls die Verwendung unterschiedlicher Paneele für den Kofferaufbau K.

## Patentansprüche

1. Dachpaneel (2) für einen Kofferaufbau (K) eines Lastkraftwagens (L), Aufliegers (A) und/oder Anhängers, wobei das Paneel wenigstens zwei am Paneel angebrachte Grundschienen (8) aufweist, wobei
wenigstens zwei die wenigstens zwei Grundschienen (8) kreuzende Zusatzschienen (10) vorgesehen sind und wobei jede der wenigstens zwei Zusatzschienen (10) verstellbar entlang der wenigstens zwei Grundschienen (8) an den wenigstens zwei Grundschienen (8) befestigt ist, **dadurch gekennzeichnet dass** an den wenigstens zwei Zusatzschienen (10) ein Deckenverdampfer (36, 40) zur Kühlung des Kofferaufbaus (K) befestigt ist.

2. Paneel nach Anspruch 1,
**dadurch gekennzeichnet, dass** die wenigstens zwei Zusatzschienen (10) stufenlos verstellbar in den wenigstens zwei Grundschienen (8) geführt sind.

3. Paneel nach Anspruch 1 oder 2,
**dadurch gekennzeichnet, dass** die wenigstens zwei Grundschienen (8) bündig in das Paneel eingelassen sind.

4. Paneel nach einem der Ansprüche 1 bis 3,
**dadurch gekennzeichnet, dass** die wenigstens zwei Grundschienen (8) parallel zueinander ausgerichtet sind.

5. Paneel nach einem der Ansprüche 1 bis 4,
**dadurch gekennzeichnet, dass** die wenigstens zwei Zusatzschienen (10) parallel zueinander ausgerichtet sind.

6. Paneel nach einem der Ansprüche 1 bis 5,
**dadurch gekennzeichnet, dass** an den wenigstens zwei Zusatzschienen (10) ein Schutzrahmen (38,42) für den Deckenverdampfer (36,40) befestigt ist.

## Claims

1. Roof panel (2) for a box body (K) of a lorry (L), semitrailer (A) and/or trailer, wherein the panel has at least two base bars (8) attached to the panel, wherein at least two additional bars (10), crossing the at least two base bars (8), are provided, and wherein each of the at least two additional bars (10) is attached to the at least two base bars (8) in an adjustable manner along the at least two base bars (8), **characterised in that** a ceiling evaporator (36, 40) is attached to the at least two additional bars (10) for cooling the box body (K).

2. Panel according to Claim 1, **characterised in that** the at least two additional bars (10) are guided in the at least two base bars (8) in a continuously adjustable manner.

3. Panel according to Claim 1 or 2, **characterised in that** the at least two base bars (8) are flush-mounted into the panel.

4. Panel according to any one of Claims 1 to 3, **characterised in that** the at least two base bars (8) are aligned parallel to one another.

5. Panel according to any one of Claims 1 to 4, **characterised in that** the at least two additional bars (10) are aligned parallel to one another.

6. Panel according to any one of Claims 1 to 5, **characterised in that** a protective frame (38, 42) for the ceiling evaporator (36, 40) is attached to the at least two additional bars (10).

## Revendications

1. Panneau de toit (2) pour une structure de coffre (K) d'un camion (L), d'une semi-remorque (A) et / ou d'une remorque, ledit panneau présentant au moins deux rails de base (8), qui sont fixés audit panneau, sachant qu'au moins deux rails supplémentaires (10), qui croisent les deux rails de base (8) au moins existants, sont prévus et que chacun des deux rails supplémentaires (10) au moins prévus, ajustable le long des deux rails de base (8) au moins prévus, est fixé aux deux rails de base (8) au moins prévus, **caractérisé en ce que**, pour le refroidissement de la structure de coffre (K), un évaporateur plafonnier (36, 40) est fixé au deux rails supplémentaires (10) au moins prévus.

2. Panneau de toit selon la revendication 1, **caractérisé en ce que** les deux rails supplémentaires (10) au moins prévus sont guidés, réglables en continu, dans les deux rails de base (8) au moins prévus.

3. Panneau de toit selon revendication 1 ou 2, **caractérisé en ce que** les deux rails de base (8) au moins prévus sont encastrés à fleur dans le panneau.

4. Panneau de toit selon l'une des revendications 1 à 3, **caractérisé en ce que** les deux rails de base (8) au moins prévus sont orientés parallèlement l'un à l'autre.

5. Panneau de toit selon l'une des revendications 1 à 4, **caractérisé en ce que** les deux rails supplémentaires(8) au moins prévus sont orientés parallèlement l'un à l'autre.

6. Panneau de toit selon l'une des revendications 1 à 5, **caractérisé en ce qu'**un cadre de protection (38, 42), prévu pour l'évaporateur plafonnier (36, 40), est fixé aux deux rails supplémentaires (10) au moins prévus.
